(19) **Europäisches Patentamt / European Patent Office / Office européen des brevets**

(11) **EP 3 418 975 A1**

(12) **EUROPEAN PATENT APPLICATION**

(43) Date of publication:
26.12.2018 Bulletin 2018/52

(51) Int Cl.:
*G06T 9/00* *(2006.01)*   *G06T 7/579* *(2017.01)*

(21) Application number: 17177699.0

(22) Date of filing: 23.06.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Koninklijke Philips N.V.**
**5656 AE Eindhoven (NL)**

(72) Inventor: **Bruls, Wilhelmus Hendrikus Alfonsus**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **DEPTH ESTIMATION FOR AN IMAGE**

(57)  An apparatus for determining depth estimates for pixels of an image of a sequence of images comprises a motion based depth estimator (101) which generates motion based depth estimates for pixels of the image. The estimator (101) comprises a global motion estimator (109) determining a global motion estimate for a region of the image; and a confidence processor (113) determining a global motion estimate confidence value for the global motion estimate. A local motion estimator (107) determines local motion estimates for pixels of the region; and a depth estimator (111) determines motion based depth estimates from the local motion estimates and the global motion estimate. A depth processor (103) generates a depth estimate for a pixel by determining an output depth estimate for the pixel in response to the global motion estimate confidence value and the motion based depth estimate for the pixel.

FIG. 1

**Description**

FIELD OF THE INVENTION

The invention relates to depth estimation based on motion in a sequence of images and in particular, but not exclusively, to depth estimation from a conventional two dimensional video clip.

BACKGROUND OF THE INVENTION

Traditionally, technical processing and use of images has been based on two-dimensional imaging but increasingly the third dimension is being explicitly considered in image processing.

For example, three dimensional (3D) displays have been developed which add a third dimension to the viewing experience by providing a viewer's two eyes with different views of the scene being watched. This can be achieved by having the user wear glasses to separate two views that are displayed. However, as this may be considered inconvenient to the user, it is in many scenarios preferred to use autostereoscopic displays that use means at the display (such as lenticular lenses, or barriers) to separate views, and to send them in different directions where they individually may reach the user's eyes. For stereo displays, two views are required whereas autostereoscopic displays typically require more views (such as e.g. nine views).

In many embodiments, it may be desirable to generate view images for new viewing directions. Whereas various algorithms are known for generating such new view images based on an image and depth information, they tend to be highly dependent on the accuracy of the provided (or derived) depth information.

Indeed, three dimensional image information is often provided by a plurality of images corresponding to different view directions for a scene. Specifically, video content, such as films or television programs, are increasingly generated to include some 3D information. Such information can be captured using dedicated 3D cameras that capture two simultaneous images from slightly offset camera positions.

However, in many applications, the provided images may not directly correspond to the desired directions, or more images may be required. For example, for autostereoscopic displays, more than two images are required, and indeed often 9 - 26 view images are used.

In order to generate images corresponding to different view directions, viewpoint shifting processing may be employed. This is typically performed by a view shifting algorithm which uses an image for a single view direction together with associated depth information. However, in order to generate new view images without significant artefacts, the provided depth information must be sufficiently accurate.

In many applications, depth information describing a real world scene may be estimated from depth cues that are determined from captured images. For example, depth information may be generated by estimating and extracting depth values by comparing view images for different view directions.

For example, in many applications, three dimensional scenes are captured as stereo images using two cameras at slightly different positions. Specific depth values may then be generated by estimating disparities between corresponding image objects in the two images. However, such depth extraction and estimation is problematic and tends to result in non-ideal depth values. This may again result in artefacts and a degraded three dimensional image quality.

In many applications, other depth cues are alternatively or additionally used, and indeed often multiple depth cues are combined to generate a more reliable depth estimated.

For example, a possible depth cue may be achieved by applying assumptions about the depth properties of a given scene/ image. For example, for most images corresponding to e.g. a landscape, pixels lower in the image tend to be closer than pixels higher up in the image.

In many scenarios, depth information may be extracted based on for example relative motion between consecutive images in a sequence of images. For example, for a translating camera, objects that are closer to the camera will exhibit larger movement in the images, and thus larger displacement between different images in the sequence. This may be used to generate depth cues without relying on multiple simultaneous images from different viewpoints. The approach will typically include compensation for the movement of the objects in the scene.

Such motion based depth estimation is particularly attractive and important as it can be applied to many existing captures which have not been made with 3D or depth processing in mind. It may in many cases allow depth to be generated from conventional captures of moving images from a traditional 2D camera, such as a conventional film or video camera.

A specific example of a motion based depth estimation approach is described in WO 2015158570 which describes an approach wherein a depth map is generated from mono video by considering the motion vectors for pixels/ blocks of pixels relative to a background motion.

Unfortunately, all depth estimation approaches tend to have suboptimal performance and to generate suboptimal depth estimations and whereas the approach of WO 2015158570 allows efficient depth estimation from a mono image sequence, it will tend to not provide optimum performance in all possible scenarios.

Hence, an improved approach for generating depth information, especially based on mono images/ motion estimation, would be advantageous and in particular an approach allowing increased flexibility, facilitated implementation, reduced complexity, reduced resource requirements, reduced sensitivity to varying image properties, an improved 3D experience and/or improved depth information would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for determining depth estimates for pixels of an image of a sequence of images, the apparatus comprising: a motion based depth estimator for generating a motion based depth estimate for pixels of the image, the motion based depth estimator comprising: a global motion estimator for determining a global motion estimate for a region of the image, a confidence processor for determining a global motion estimate confidence value for the global motion estimate, a local motion estimator for determining local motion estimates for pixels of the region, and a depth estimator for determining motion based depth estimates for pixels of the region in response to local motion estimates for the pixels of the region and the global motion estimate; and a depth processor for generating an output depth estimate for a pixel of the pixels of the region in response to the global motion estimate confidence value and the motion based depth estimate for the pixel.

The invention may provide improved depth estimation in many scenarios and embodiments, and in particular may provide improved depth estimation for motion based depth estimation. In many embodiments, improved adaptation of depth estimates to reflect reliability and/or accuracy of depth estimates may be achieved.

The approach may allow efficient and/or low complexity operation. In particular, the approach does not require individual confidence values to be determined for each depth estimate and/or each individual local motion estimate.

The approach reflects an insight that relative motion based depth estimation may perform reliably in many situations but may be sensitive to specific image characteristics or conditions, and that a good indication of these situations being present is provided by a global motion estimate confidence value.

The motion estimate(s) may be indicative of a movement of image objects between images of the sequence of images. The region may be a subset of the image or may in some scenarios be the entire image. The global motion estimate may be indicative of background motion for the region, and thus may equally be referred to as the background motion estimate. Similarly, the global motion estimate confidence value may equally be referred to as the background motion estimate confidence value.

In accordance with an optional feature of the invention, the depth processor is arranged to generate the output depth estimate in response to a plurality of depth estimates for the pixel including the motion based depth estimate, and the depth processor is further arranged to adapt a weight of the motion based depth estimate relative to at least one other depth estimate of the plurality of depth estimates in response to the global motion estimate confidence value.

This may in many embodiments and scenarios provide improved, and typically more accurate and/or reliable, depth estimates. The weight for the motion based depth estimate may be increased for the global motion estimate confidence value being indicative of an increasing confidence.

In accordance with an optional feature of the invention, the at least one other depth estimate includes at least one from the group of: an image position depth estimate; and an image object type depth estimate.

This may in particular provide an improved depth estimation with the different approaches having particularly suitable matching and complementary properties thereby providing a synergistic effect. For example, an image position depth estimate is typically more accurate and reliable for background objects whereas motion based depth estimates are often more accurate and reliable for moving foreground objects. A suitable combination of these depth estimates may provide an improved overall depth estimation for the image.

In accordance with an optional feature of the invention, the depth processor is arranged to generate the output depth estimate in response to a scaling of a difference between the motion based depth estimate and a default depth value; a scale factor for the scaling being dependent on the global motion estimate confidence value.

This may provide improved depth estimates in many scenarios by providing depth estimates for which a degree of depth effect may be adapted to reflect the reliability of the estimates. For example, a three-dimensional effect may be reduced towards a two-dimensional effect in situations where the image conditions may be such that the uncertainty of the depth estimates increases.

In accordance with an optional feature of the invention, the default depth value corresponds to one of a background depth value and a display level depth value.

This may provide improved performance in many embodiments.

In accordance with an optional feature of the invention, the confidence processor is arranged to determine the global motion estimate confidence value in response to a number of pixels in the region for which a first depth estimate is further forward than a threshold depth value.

This may provide a particularly suitable global motion estimate confidence value in many embodiments, and in particular may provide a global motion estimate confidence value that suitable for indicating whether conditions are likely to result in degraded depth estimates. Further, the complexity and computational resource requirements required to the global motion estimate confidence value may be kept low.

The first depth estimates may specifically be the motion based depth estimates but may in some embodiments be other depth estimates, such as depth estimates partly or fully based on other depth cues than motion. The first depth estimate for a pixel may be any depth estimate generated for the pixel. In particular, the first depth estimate for a pixel may be at least one of a motion based depth estimate generated for the pixel, an output depth estimate generated for the pixel, and a depth estimate generated for the pixel using non-motion based depth estimation.

A depth estimate may be further forward than a threshold value if it indicates a position closer to the viewpoint/ camera point than the threshold. Thus, for a depth value with increasing distance from the viewer being indicated by an increasing value, the depth value is further forward if it has a smaller value than the threshold. For a depth value with decreasing distance from the viewer being indicated by an increasing value, the depth value is further forward if it has a larger value than the threshold.

In accordance with an optional feature of the invention, the confidence processor is arranged to determine the global motion estimate confidence value in response to a distribution of first depth estimate for pixels in the region.

This may provide a particularly suitable global motion estimate confidence value in many embodiments, and in particular may provide a global motion estimate confidence value that is suitable for indicating whether conditions are likely to result in degraded depth estimates.

The first depth estimate for a pixel may be any depth estimate generated for the pixel. In particular, the first depth estimate for a pixel may be at least one of a motion based depth estimate generated for the pixel, an output depth estimate generated for the pixel, and a depth estimate generated for the pixel using non-motion based depth estimation.

In accordance with an optional feature of the invention, the confidence processor is arranged to determine the global motion estimate confidence value in response to a variation measure for the distribution of first depth estimate for pixels in the region.

This may provide a particularly suitable global motion estimate confidence value in many embodiments, and in particular may provide a global motion estimate confidence value that is suitable for indicating whether conditions are likely to result in degraded depth estimates. The variation measure may for example be a variance measure.

In accordance with an optional feature of the invention, the confidence processor is arranged to determine the global motion estimate confidence value in response to a number of pixels in the region for which a first depth estimate deviates from a reference depth value for the region by more than a threshold.

This may provide a particularly suitable global motion estimate confidence value in many embodiments, and in particular may provide a global motion estimate confidence value that is suitable for indicating whether conditions are likely to result in degraded depth estimates. Specifically, it may provide an accurate global motion estimate confidence value by detecting outliers.

In accordance with an optional feature of the invention, the first depth estimate for a pixel is determined from a motion based depth estimate for the pixel.

This may provide a particularly suitable global motion estimate confidence value in many embodiments.

In accordance with an optional feature of the invention, the confidence processor is arranged to determine the global motion estimate confidence value in response to a distribution of local motion estimate values for pixels in the region.

This may provide a particularly suitable global motion estimate confidence value in many embodiments, and in particular may provide a global motion estimate confidence value that is suitable for indicating whether conditions are likely to result in degraded depth estimates.

In accordance with an optional feature of the invention, the confidence processor is arranged to determine the global motion estimate confidence value in response to a distribution of a difference measure between local motion estimate values for pixels in the region and the global motion estimate.

This may provide a particularly suitable global motion estimate confidence value in many embodiments, and in particular may provide a global motion estimate confidence value that is suitable for indicating whether conditions are likely to result in degraded depth estimates.

According to an aspect of the invention there is provided a method of determining depth estimates for pixels of an image of a sequence of images, the method comprising: determining a global motion estimate for a region of the image; determining a global motion estimate confidence value for the global motion estimate; determining local motion estimates for pixels of the region; determining motion based depth estimates for pixels of the region in response to local motion estimates for the pixels of the region and the global motion estimate; and generating a depth estimate for a pixel of the pixels of the region in response to the global motion estimate confidence value and the motion based depth estimate for the pixel.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of a depth estimation apparatus in accordance with some embodiments of the invention;
FIG. 2 illustrates an example of movement of objects in a sequence of images; and
FIG. 3 illustrates an example of movement of objects in a sequence of images.

DETAILED DESCRIPTION OF THE EMBODIMENTS

The following description focuses on embodiments of the invention applicable to depth estimation from a 2D video sequence. However, it will be appreciated that the invention is not limited to this application but may be applied to many other image signals.

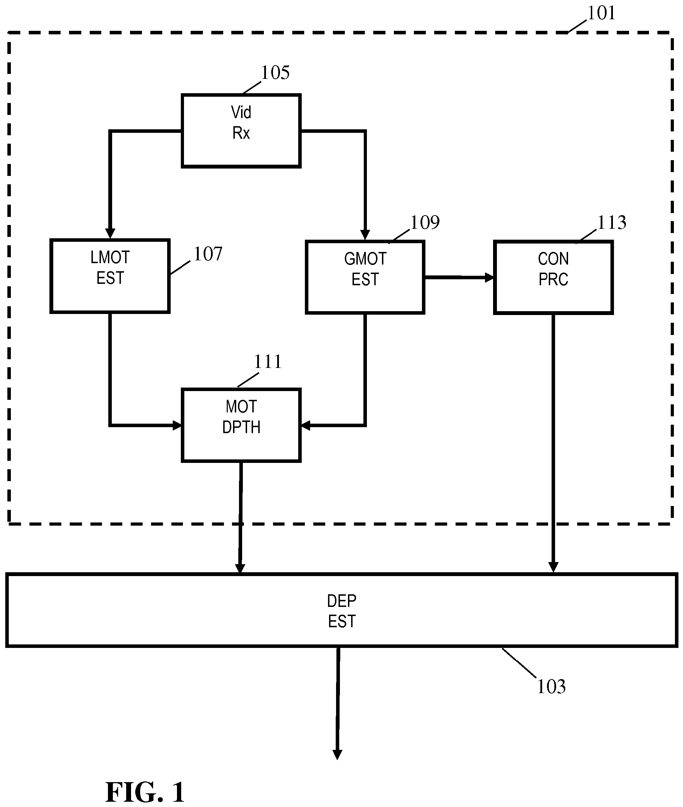

FIG. 1 illustrates an example of a depth estimation apparatus in accordance with some embodiments of the invention. The depth estimation apparatus comprises a motion based depth estimator 101 which is arranged to generate motion based depth estimates for an image based on detection of motion between images (frames) of an image sequence (typically a video item). The motion based depth estimator 101 is coupled to a depth processor 103 which is arranged to generate depth estimates for the image from the motion based depth estimates. Specifically, the motion based depth estimates may by the depth processor 103 be scaled or combined with other depth estimates.

The motion based depth estimator 101 comprises a receiver 105 which is arranged to receive a sequence of images. Specifically, the receiver 105 may receive a video item or clip comprising a sequence of individual frames/ images. It will be appreciated that in many embodiments, the sequence of images/ video may be received as an encoded data stream or file and the receiver 105 may be arranged to decode the received data stream or file to generate a sequence of decoded images.

The receiver 105 is coupled to a local motion estimator 107 which is arranged to generate local motion estimates for pixels of the image. In many embodiments, the local motion estimator 107 is arranged to generate individual motion estimates for the pixels of the image whereas in other embodiments individual motion estimates may be generated for a block/ region/ group of pixels. However, individual local motion estimates are determined for a relatively small area which in most embodiment comprises no more than 2, 8, 16, 64, 100, 256, or 1024 pixels. Thus, in most embodiments, a local motion estimate is indicative of a motion of an area 2, 8, 16, 64, 100, 256, or 1024 pixels.

The receiver 105 is further coupled to a global motion estimator 109 which is arranged to generate a global motion estimate for a region of the image. The region is typically a substantial part of the image, and indeed is typically at least 5%, 10%, 20% or 50% of the image. Indeed, in many embodiments, a global estimate is generated for the entire image. The global motion estimate may also be considered to be a background motion estimate, and thus may be an estimation of the movement of the background of the image. Such movement may typically result when the camera/ viewpoint is moving or panning.

The global motion estimate may thus be considered to be an indication of the overall movement in the image for background objects.

It will be appreciated that as evidenced by the relative references to local motion estimates and to the global motion estimate, the latter relates to a larger region of the image than the former, i.e. each local motion estimate is provided for an area which is smaller than the global motion estimate. Specifically, for a region for which a single common global motion estimate is generated, the local motion estimator 107 may generate a plurality of local motion estimates for subregions/ block of the region. In many embodiments, no less than 5, 10, 20, 50, 100, or even 500 or 1000 local motion estimates may be generated for the region for which a single global motion estimate is generated. Thus, the region (for the global motion estimate) may in many embodiments comprise no less than 5, 10, 20, 50, 100, or even 500 or 1000 more pixels than an area for which an individual local motion estimate is generated.

It will be appreciated that whereas the region for which the global motion estimate is generated is larger than the areas for which individual local motion estimates are generated (and that a plurality of local motion estimates are generated for the region), the exact size difference (or indeed the number of local motion estimates generated in the region for which a single global motion estimate is generated) will depend on the preferences and requirements of the individual embodiment. Indeed, in some embodiments, this may be varied dynamically, e.g. by adapting the size of the blocks used for motion estimation e.g. dependent on how much overall motion there is in the image or region.

The local motion estimator 107 and the global motion estimator 109 are coupled to a relative motion depth estimator 111 which is arranged to generate motion based depth estimates for pixels of the region in response to the local motion estimates for the pixels and the global motion estimate. In many embodiments, a motion based depth estimate is generated for each local motion estimate, and in many embodiments an individual motion based depth estimate may be generated for each pixel. It will be appreciated that different algorithms or approaches may be used to generate the motion based depth estimate. As a low complexity example, the depth may simply be determined as a monotonic function of the difference between the local motion estimate and the global motion estimate. Specifically, an increasingly forward depth value/ estimate may be determined the higher the difference between the local motion estimate and the global motion estimate (for the motions being in the same direction (opposite to the direction of e.g. a panning of the camera)).

The motion based depth estimator 101 may accordingly generate motion based depth estimates which are determined based on the estimated motion of individual pixels or pixel blocks relative to a global/ background motion estimate. The motion based depth estimator 101 may specifically generate depth estimates for an image/ frame of a 2D sequence of images/ video and without requiring any 3D information (such as stereo images).

The approach may in many embodiments and scenarios, and for many practically encountered images, provide a relatively accurate and reliable depth estimation. In particular, the consideration of relative motion (local motion relative to global/ background motion) may provide improved depth estimation in many embodiments. However, although relatively reliable and accurate depth estimation is possible in many situations, the approach is not ideal. The Inventor has realized that in some scenarios and for some specific image characteristics, the approach may result in less than optimum depth estimates. In the approach of FIG. 1, further processing is applied to the motion based depth estimates in order to generate depth estimates that may provide improved operation in many scenarios. In particular, it may in many embodiments provide improved accuracy or reliability of the resulting depth estimates. In other embodiments, it may generate depth estimates that are adapted to compensate or take into account the possibility of inaccuracies or errors in the depth estimation.

In particular, the Inventor has realized that an improvement may be achieved by applying a post-processing to the generated motion based depth estimates with the post-processing being dependent on a confidence value for the global motion estimate. Thus, rather than merely considering a generic confidence value for the generated motion based depth estimates, the post-processing is specifically based on an estimated confidence or reliability for the global motion estimate, i.e. for the background depth estimate. Specifically, the motion based depth estimator 101 comprises a confidence processor 113 which is coupled to the global motion estimator 109 and which is arranged to generate a global motion estimate confidence value for the global motion estimate.

The global motion estimate confidence value is specifically generated to be indicative of a confidence of the global motion estimate but independent of the confidence of the generated local motion estimates. Thus, in the system of FIG. 1, the confidence processor 113 is coupled to the global motion estimator 109 but not to the local motion estimator 107 and the global motion estimate confidence value is dependent on the estimation of the global motion estimate by the global motion estimator 109 but is independent of the estimation of the local motion estimate(s) by the local motion estimator 107.

It will be appreciated that the specific approach for generating the confidence value may depend on the specific algorithm and criteria used by the global motion estimator 109 when generating the global motion estimate. Specific examples will be described in more detail later.

In the system of FIG. 1, the motion based depth estimator 101 is coupled to the depth processor 103 which is fed the motion based depth estimates from the relative motion depth estimator 111. The depth processor 103 is arranged to generate output depth estimates from the motion based depth estimates, i.e. for a given pixel in the region, the depth processor 103 may generate an output depth estimate. Further, the depth processor 103 receives the global motion estimate confidence values and proceeds to generate the output depth estimates based on the global motion estimate confidence values.

Thus, the depth estimation apparatus of FIG. 1 is arranged to generate motion based depth estimates based on the relative difference between local motion estimates and a global motion estimate, and then to subsequently generate output depth estimates by post-processing the motion based depth estimates in response to a global motion estimate confidence value for the global motion estimate. The approach allows for a substantially improved generation of depth estimates from e.g. a mono/ 2D video sequence. The approach may for example be used to generate a depth map for each frame of a 2D video sequence. Further, the approach has in practice been found to provide a particularly advantageous performance in many practical embodiments while maintaining low complexity. Indeed, not only does the approach allow reduced computational complexity and demand by not requiring individual confidence values to be generated for each motion based depth estimate or indeed for each motion based depth estimate. Further, as the global motion estimate confidence value is generated for a substantially larger area/ more pixels than the local motion estimates or motion based depth estimates, the reliability and accuracy of the global motion estimate confidence value will also tend to me substantially higher than any individual confidence value, and accordingly a post-processing based on a global motion estimate confidence value tends to provide a substantially more reliable and better performance in practice.

In particular, the approach reflects the insight that depth estimation based on comparison of local and global motion estimates is likely to provide sufficiently accurate and reliable results in most scenarios but may be sensitive to specific image characteristics. It further reflects the insight that these image characteristics tend to be directly related to the reliability of the global motion estimate and that a particularly advantageous operation is achieved by specifically adapting the depth estimates in response to a global motion estimate confidence value.

The specific global motion estimate confidence value dependent post-processing will depend on the specific preferences and requirements of the individual embodiment. For example, in many embodiments, the depth processor 103 may be arranged to generate the output depth estimates based on a plurality of depth estimates that have been generated using algorithms for depth estimation and which may often have considered different depth cues. The depth processor 103 may in such embodiments be arranged to adapt a weighting of the motion based depth estimates relative to other depth estimates in dependence on the global motion estimate confidence value. As another example, a degree of depth variations may be adapted in dependence on the global motion estimate confidence value, e.g. the more unreliable the global motion estimate confidence value (typically the lower the confidence value), the "flatter" the resulting depth map. Examples of post processing will be described in more detail later.

In different embodiments, different specific algorithms may be used to determine the motion based depth estimates based on the local motion estimates and the global motion estimate. As a specific example, the described approach of FIG. 1 may be used with a motion based depth estimator 101 based on the approach described in WO 2015158570.

As previously mentioned, the depth estimator 101 may compute depth values from a video sequence based on motion estimates. The video sequence may comprise a sequence of images (video frames) which are two-dimensional with each image being a two-dimensional array of image pixels. The depth value may correspond to an image pixel, being an image pixel at a current pixel location in a current image of the video sequence. For example, the depth value may be one of the depth values of a depth map, whereas the depth map holds all depth values corresponding to the respective image pixels of the current image. The depth map may have the same resolution as the image or may in some embodiments e.g. have a lower resolution.

The depth is typically considered the third dimension in addition to the horizontal and vertical dimension of an image of the video sequence. If the image is converted to a 3D-format and shown on a (3D) display, then the depth dimension would typically be substantially perpendicular to the plane of the display. In the following, for a viewer standing in front of the display, image content (e.g. a foreground object) having large (high) depth values would be perceived as standing more out of the display towards the viewer, than if said image content would have smaller (lower) depth value. In other words, a large depth value corresponds to a smaller perceived distance to the viewer, whereas a smaller depth value corresponds to a larger perceived distance to the viewer. However, it will be appreciated that in other embodiments, an increasing depth value may be indicative of an increasing distance to the viewer, and thus that a higher depth value may in such embodiments indicate that the corresponding object is further to the back in the image/ scene.

The local motion estimator 107 of the depth estimator 101 may specifically determine, from the video sequence, a current local motion vector representing motion of image content at the current pixel location.

It should be noted that 'image content at the current pixel location' may be considered to, in many embodiments, refer to a small group of image pixels near the current pixel location. For example, the group of image pixels may be a small patch of 8x8 image pixels. The image content at the current pixel location then refers to a portion of the current image portrayed by the small patch of 8x8 image pixels. Thus, the local motion estimation may be based on small groups of pixels, such as small pixel blocks, groups, or areas.

Also, references to the 'current pixel location' may be considered to refer to a pixel location in the current image. 'The current pixel location' thus implies 'the current pixel location in the current image'.

In the local motion estimator 107, a current local motion vector is thus determined for the current pixel location. The current local motion vector represents motion of the image content at the current pixel location. The current local motion vector may have a horizontal and vertical component indicating a two-dimensional displacement of the image content. For example, the current local motion vector $(dX, dY)$ represents how the image content moves between (a) the current image and (b) an image directly succeeding the current image in the video sequence. Said image content moves by a number of pixels $dX$ in the horizontal (X) direction and by a number of pixels $dY$ in the vertical direction (Y).

For example, the video sequence may be a movie with a frame rate of 50 Hz, i.e. 50 images per second. The current image may correspond to a moment in time $t1$. The image directly succeeding the current image then corresponds to a moment in time $t2=t1+0.02$ sec. A current local motion vector may be $(dX, dY) = (+4,-2)$, representing that said image content moves horizontally by 4 pixels to the right and moves vertically by 2 pixels downwards, within the time period of 0.02 sec between $t1$ and $t2$.

Determining the current local motion vector may be done by estimating local motion vectors for all image pixels of the current image, and then selecting, from the local motion vectors, the current local motion vector corresponding to the current pixel location. For example, local motion vectors may be determined by searching for matching (similar) image content in both the current image and an adjacent image in the video sequence. An example of such an algorithm is the so-called '3D Recursive Search' (see also 'True estimation with 3-D recursive search block matching', IEEE Transactions on Circuits and Systems for Video Technology, Vol.3 No.5, Oct 1993). Motion may be determined on a pixel-basis, implying that a local motion vector is computed (estimated) for each image pixel in the current image. Local motion vectors may initially also be determined on a block-basis, which implies that a single local motion vector is determined for each block of pixels in the current image, e.g. a block of 8x8 image pixels. In that case, the single local motion vector represents motion of every image pixel in the block of image pixels. Optionally, a refinement algorithm may be applied to refine the block-specific local motion vector to a pixel-specific local motion vector, e.g. using interpolation between neighboring local motion vectors.

As another example, the current local motion vector may be determined by selecting it from local motion vectors that are pre-computed and provided with the video sequence. For example, the video sequence may be obtained by decoding an encoded video stream that also contains the pre-computed local motion vectors. For example, an MPEG-encoded video stream typically contains both the video sequence and local motion vectors. In such a case, the local motion estimator 107 may simply extract the readily available local motion vectors received with the video sequence.

In the example, the relative motion depth estimator 111 is arranged to determine the motion based depth estimates based on relative motion. Specifically, it may determine a relative local motion vector which represents the local motion vector relative to a global motion vector determined by the global motion estimator 109.

The global motion vector may represent the overall motion in the current image or in a region/ subset of the image, and may be computed e.g. as an average or median of all local motion vectors in the current image/ region/ subset. A current relative local motion vector may thus be calculated e.g. by subtracting the global motion vector from the local motion vector at the current pixel location. To emphasize the difference to a relative local motion vector, a local motion vector may also be referred to, in what follows, as an absolute local motion vector.

A benefit of computing the relative local motion vector is that the resulting depth estimate/ depth value (which is based on the current relative local motion vector) may be determined such that it is largely invariant to background movement in a scene of the video sequence. A scene may be represented by multiple consecutive images of the video sequence at respective consecutive time instances. Invariance to background movement in a scene may be explained with reference to the following two cases.

In a first case, a scene comprising a fast-moving foreground object before a static background is considered. The foreground object moves in that scene, while the background is static. Using (absolute) local motion vectors as direct indicators of depth, depth values are assigned correctly to pixels: large depth values are assigned to pixels of the foreground object and small depth values are assigned to pixels of the background. Using relative local motion vectors as direct indicators of depth has the same result in this case, because the background is static, so that the relative local motion vectors are effectively absolute motion vectors.

In a second case, a scene comprising a static foreground object in front of a fast-moving background is considered. The foreground object is static in that scene, while the background moves. Using (absolute) local motion vectors as direct indicators of depth, depth values are incorrectly assigned: large depth values are assigned to pixels of the background and small depth values are assigned to pixels of the foreground object. Using relative local motion vectors as direct indicators of depth has a different result in this case, because relative local motion vectors of the foreground object are large, whereas relative local motion vectors of the background are (by definition) small. Consequently, depth values are then assigned correctly to pixels: large depth values are assigned to pixels of the foreground object and small depth values are assigned to pixels of the background.

These two cases illustrate the increased invariance of the generated motion based depth estimate to background movement, when the estimation of this is based on a relative local motion vector rather than an absolute local motion vector. Computing the depth estimate based on the relative local motion vector may therefore provide improved depth estimation.

The relative motion depth estimator 111 may specifically determine the motion based depth estimates in two steps. The first step may determine an intermediate depth value. The second step may then map or convert this intermediate depth value to the motion based depth value.

The intermediate depth value may be determined as the length of the relative local motion vector. For example, if the length of the relative local motion vector is 5 pixels, then the intermediate depth value may be 5. As another example, the intermediate depth value may be determined as the absolute value of either the horizontal component or the vertical component of the relative local motion vector.

To map the intermediate depth value to the motion based depth value, a mapping function of the linear type $y=ax+b$ may be applied, having a gain $a$, an offset $b$, an input $x$ for the intermediate depth value, and an output $y$ for the motion based depth value. The mapping function may map the intermediate depth value to a depth range. For example, if the intermediate value typically lies in a range of [0..10] and needs to be mapped to a depth range of [-10..10], then the mapping function may be $y=2x-10$. For example, using this mapping function, the intermediate depth values 0, 5, and 10 are then mapped to a motion based depth values of -10, 0, and 10, respectively.

In other embodiments, non-linear mapping functions $y=f(x)$ may also be used to map the intermediate depth value to the motion based depth value. The mapping function may e.g. include a suppression of large depth values. Such suppression may be accomplished by a function that has a low derivative for large values of $x$, thus for large values of the intermediate depth value. For example, the mapping function may be defined as $y$ being proportional to the square root of x. As another example, the mapping function may be defined as a soft-clipping function wherein y, representing the current dynamic depth, gradually tends to a predetermined maximum value for large values of x, representing the intermediate depth value. Without such suppression, the conversion of the current image to a 3D image to be viewed on a 3D display may in some scenarios or systems result in extreme depth values potentially causing discomfort to a viewer. Such extreme depth values may also in some situations cause a problem in portraying the resulting 3D image on a 3D display that can only display a 3D image having a limited depth output range. An auto-stereoscopic 3D display is an example of such a 3D display having a limited depth output range.

As described in WO 2015158570, relative motion based depth estimates may in some embodiments be generated by combining relative motion based depth estimates for a current image and relative motion based depth estimates for a previous image. The motion based depth estimates may e.g. be generated by a weighted summation of the motion based depth estimates for the current and previous images with the weights e.g. being dependent on the degree of motion.

Although the generated motion based depth estimates may often be directly useful and allow three-dimensional information to be generated based on mono (2D)-image sequences, the approach may as previously mentioned also be sensitive to inaccuracies, errors, or artefacts being introduced in some situations. In particular, whereas the approach in most cases and for most images may produce a very reliable depth map, it may also for some (typically more unusual) image characteristics result in an unrealistic depth map which may even lead to viewer discomfort.

As previously mentioned, the depth estimation of the system of FIG. 1 is improved by the depth processor 103 being arranged to post-process the generated motion based depth estimates in response to the global motion estimate confidence value. Specifically, the approach is based on the insight that consideration of the global motion estimate confidence value may provide a good indication of the probability of the image characteristics being such that the depth estimation is not acceptable or desirable.

In many embodiments, the depth processor 103 may be arranged to generate the depth estimates based on a plurality of different depth cues or estimates. Thus, for a given pixel, the motion based depth estimate generated by the motion based depth estimator 101 may be combined with other depth estimates for the pixel where these other depth estimates are typically generated using other algorithms and often substantially different depth cue principles.

For example, in some embodiments, a depth cue may be generated based on the position of the pixel in the image. Indeed, for most images of real world scenes (or virtual scenes reflecting or simulating a real world like scene), image objects towards the bottom of the image tend to be closer than image objects towards the top of the screen. For example, for a landscape scene, the bottom of the image will tend to represent ground close to the camera with the ground being at an increasingly distance for increasing vertical positions in the image. The top of the image may often be the sky at a maximum distance. Thus, the position of the pixel in the image may in many situations and scenes provide a (typically relatively general) indication of the depth of the corresponding object in the image.

As another example, the type of the image object may be indicative of a depth of the object. For example, overlay graphic image objects, such as subtitles, channel logos, titles etc. tend to be positioned towards the front, and typically in front of all other objects in the scene. Similarly, an image object representing the sky will tend to be positioned towards the back and typically has a depth value corresponding to a background depth value. Thus, in some embodiments, depth estimates may also be determined by allocating depth values based on the type of image object. It will be appreciated that various algorithms and approaches are known for identifying and categorizing image objects, such as e.g. detecting areas having corresponding image properties and categorizing the object as a given type based on these properties (e.g. a sky image object may be identified as a large light blue area towards the top of the image).

In some embodiments, the depth estimation apparatus may accordingly comprise a plurality of depth estimators which all generate depth estimates for pixels of the current image, based on different algorithms and often based on different depth cues.

The different depth estimates are all fed to the depth processor 103 which proceeds to generate the output depth estimates for the pixels by combining the individual (intermediate) depth estimates.

Specifically, in many embodiments, the output depth value for a given pixel may be determined as a weighted combination of the different depth estimates for the pixel. The weights for the different depth estimates may be dependent on various factors and may in particular in the system of FIG. 1 be dependent on the global motion estimate confidence value.

Specifically, the weighting of the motion based depth estimate may be increased for an increasing global motion estimate confidence value. Thus, the more reliable the global motion estimate is considered to be, the higher the motion based depth estimate is weighted relative to other depth estimates. The exact dependence on weighting of the motion based depth estimate relative to other depth estimates may depend on the preferences and requirements of the individual embodiment. In many scenarios, the approach may allow a low complexity adaptation of the output depth estimate allowing it to, in particular, adapt to situations in which the image conditions are such that the motion based depth estimate is unlikely to provide an accurate reflection of the scene. Specifically, for pixels/ regions/ images for which the characteristics of the image may result in a less reliable global motion estimate, the weights may be changed such that the output depth estimate is determined from other depth estimates and cues than the motion based depth estimate.

As a specific example, the motion based depth estimates may be part of a depth map determined by the motion based depth estimator 101 with the depth map containing depth values of all image pixels of the current image. Such a depth map of motion based depth estimates clearly depends on motion, and therefore may be referred to as a 'dynamic' depth map. In addition, a depth map that may be referred to as a 'static' depth map may supplement the dynamic depth map. The static depth map may be based on depth cues from within the current image itself, and thus does not depend on motion. For example, the static depth map may be a so-called 'slant' that describes the depth as a gradient of the vertical dimension of the current image, gradually changing from nearby (i.e. large depth values) at the bottom of the current image too far away (i.e. small depth values) at the middle or top of the current image. The static depth map may be based on other non-motion dependent depth cues from the current image. For example, using a face detector, large depth values may be assigned to areas in the current image containing faces, so that the faces become part of the foreground of the current image. As another example, using a sky detector, low depth values may be assigned to areas of the current image detected as sky, so that said areas become part of the background in the current image.

A static depth value (from a static depth map) may be combined with the motion based depth values, and specifically may be summed using a weighted summation. In this way, the output depth value generated by the depth processor 103 may have a meaningful depth value, even when e.g. there is not enough relative motion present in the current image for a reliable computation of the dynamic depth value.

Combining the static depth value and the dynamic depth value depends on the global motion estimate confidence value, i.e. it depends on how reliable the global motion estimate is estimated to be. For example, when the confidence in the global motion estimate is low, the output depth value depends more on the static depth value than on the dynamic depth value, and, conversely, when the confidence is high, the output depth value depends less on the static depth value than on the dynamic depth value. Such a combination of the static depth value and the dynamic depth value may be implemented as a weighted average, wherein the respective relative contributions (i.e. weight factors) of the static and dynamic depth value in the weighted average gradually vary with the global motion estimate confidence value (and with the sum of the weights typically being equal to one although this is not necessary. For example, the weight for one depth estimate may be kept constant and the other varied in dependence on the global motion estimate confidence value to vary the relative weighting).

In some embodiments, the depth processor 103 may be arranged to generate the output depth estimate for a given pixel in response to a scaling of a difference between the motion based depth estimate and a default depth value, where the scale factor for the scaling is dependent on the global motion estimate confidence value. The scaling may be performed in addition to the combination with other depth estimates (e.g. by the scaling being before, after, or combined with the actual weighted summation).

In many embodiments, the default depth value may be a display level depth value, (corresponding to a value where there is no disparity between different viewpoints) or may often be e.g. the most forward or rearward possible depth value (e.g. corresponding to the background depth).

As another example, the default depth value could potentially be a depth value determined using a different depth algorithm or cue. For example, the default depth value could be a value determined based on the position of the pixel in the image. In such an example, an overall depth assumption for the scene may be applied with this being modified ("modulated") by a more specific depth adjustment derived from motion. The degree of this adjustment can be made dependent on the global motion estimate confidence value and thus reflect how accurate the motion based depth estimate is likely to be.

The scaling may specifically be such that the scaling reduces the difference for decreasing global motion estimate confidence values. For example, if the global motion estimate confidence value exceeds a given threshold, the output depth estimate may be generated directly as the motion based depth estimate for the pixel. However, if the global motion estimate confidence value drops below the threshold, the output depth estimate may be generated to have a reduced difference with respect to e.g. a display depth value (e.g. the midpoint of the available depth range). For example, the output depth estimate may be generated as:

$$d_o = d_n + (d_{mb} - d_n) \cdot \alpha_o$$

where $d_{mb}$ is the motion based depth estimate, $d_n$ is the default depth value, and $\alpha_o$ is a scale factor which is does not exceed unity and which depends on the global motion estimate confidence value (with the value of $\alpha_o$ reducing for reducing global motion estimate confidence value).

The effect of the post-processing may in such embodiments be that the three-dimensional effect is reduced towards a two dimensional effect for scenarios for which the system detects that it is likely that the image conditions are such that the generated motion based depth estimates may not be sufficiently reliable or accurate. Thus, the approach may identify situations which may lead to e.g. viewer discomfort and actively adapt the generated depth map to reduce the depth variation to avoid this.

In the specific example of FIG. 1, the global motion estimator 109 is arranged to generate the global motion estimate based on an evaluation of the local motion estimates of the region. For example, it may be arranged to generate the local motion estimate as an average or mean of the local motion estimates in the region.

For example, the horizontal component (X) of a global motion vector may be determined by computing a trimmed mean of the horizontal components of the respective local motion vectors in the corresponding region. The trimmed mean may be an average of the horizontal components, wherein the largest 10% and smallest 10% of the horizontal components are excluded from the average. Similarly, the vertical component (Y) of the global motion vector may be determined by computing a trimmed mean of the vertical components of the respective local motion vectors. The global motion estimate may then be generated as the global motion vector (i.e. it may have a direction) or may e.g. be generated as the amplitude of this vector.

As another example, the global motion vector may be determined by computing the horizontal component of the global motion vector as a median of the horizontal components of the local motion vectors, and by computing the vertical component of the global motion vector as the median of the vertical components of the local motion vectors.

In some embodiments, however, the global motion vector may not be generated from the local motion vectors. For example, the global motion vector may be determined by a so-called projection method, which does not require use of the local motion vectors. In a projection method, the horizontal component of the global motion vector may be determined as follows: A first profile is computed by vertically averaging all pixel lines of the current image. The first profile is thus a pixel line itself, comprising the vertically averaged pixel lines of the current image. In a similar way, a second profile is computed by vertically averaging all pixel lines of the previous image. The horizontal component is then determined as the number of horizontal pixels that the first profile needs to be shifted to best match the second profile. A best match may be determined as the shift for which the difference between the (shifted) first profile and the second profile is at a minimum. The vertical component of the global motion vector is determined in an analogous way, thus based a first and second profile from horizontally averaging pixel columns of the current and previous image. An example of such a projection method may be found in US20090153742.

As previously mentioned, different approaches may be used to generate the global motion estimate confidence value in different embodiments, and indeed many motion estimation algorithms often derive parameters that may be directly indicative of the confidence/ reliability of the generated estimate and these parameters may be used directly in some embodiments.

In many embodiments, and in particular in embodiments where the global motion estimate is determined by evaluating the local motion estimates in the region, the global motion estimate confidence value may be determined in response to the local motion estimates, and specifically in response to a distribution of the local motion estimate values for the pixels in the region. In many embodiments, the confidence processor 113 may be arranged to determine the global motion estimate confidence value in response to the degree of variation of the local motion estimates. For example, a variance of the local motion estimates may be determined, and the global motion estimate confidence value may be generated to be indicative of increasing confidence the lower the variance.

In some embodiments, the confidence processor 113 may be arranged to determine the global motion estimate confidence value in response to a distribution of a difference measure between local motion estimate values for pixels in the region and the global motion estimate. For example, the confidence processor 113 may identify the number of pixels for which the difference between the local motion estimate and the global motion estimate exceeds a given threshold. The global motion estimate confidence value may be generated as a monotonically decreasing function of the number of pixels for which this is the case. As another example, the variance of the difference value may be determined, and the global motion estimate confidence value may be generated with a decreasing value for an increasing variance.

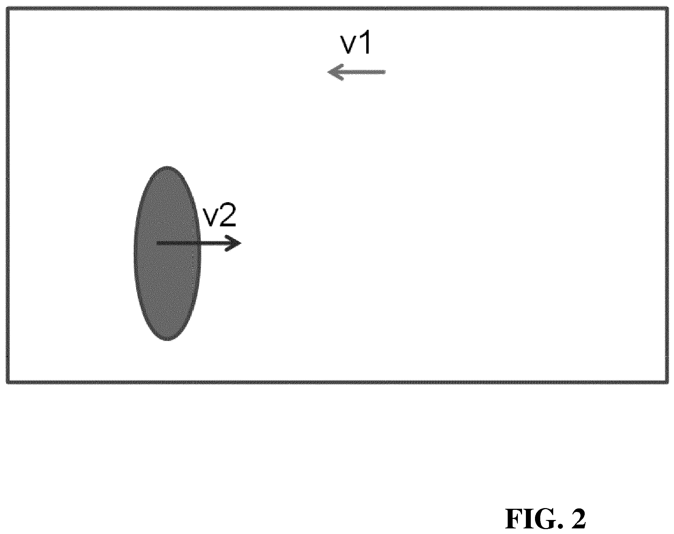

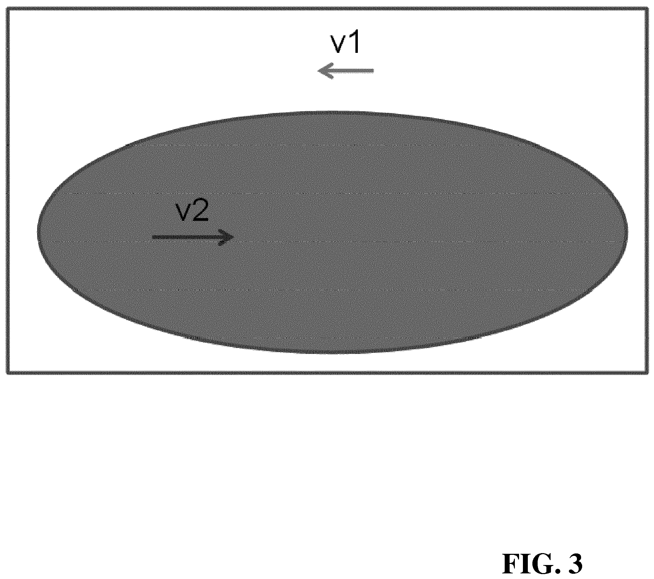

Such approaches may indicate that the global motion estimate is considered more accurate and reliable the less variations and outliers that exist for the local motion estimate. The suitability of such a measure can be evidenced by considering an example wherein only background is present in the image and therefore all parts of the region are moving in the same way with this only being dependent on the camera movement/ panning. In a situation such as that of FIG. 2, wherein a small foreground object moves relative to the background movement in the region, a global motion estimate determined based on e.g. an averaging of the local motion estimates will still result in an reliable global motion estimate which is indicative of a background movement since the impact of the local motion estimates from the moving object on the global estimates is relatively small as it only relates to few pixels compared to the region as whole. However, if the object is much larger, such as that in FIG. 3, a substantially higher impact of the moving object on the global motion estimate results. Accordingly, a less accurate or reliable indication of the background movement is generated, e.g. when this is done by averaging the local motion estimates. Indeed, as a more extreme example, if the region included a large proportion of pixels belonging to a high number of foreground objects moving in different directions, a global motion estimate with a low reliability would result.

In many embodiments, the global motion estimate confidence value may be determined based on depth considerations for the region, and specifically based on the distribution of the depth values of the region. In many embodiments, the depth processor 103 may be arranged to determine the global motion estimate confidence value based on an evaluation of the motion based depth estimates generated by the relative motion depth estimator 111 but it will be appreciated that in some embodiments the depth considerations could additionally or alternatively potentially be based on other depth estimates, such as depth estimates generated from other depth cues or indeed the finalized output depth estimates.

In many embodiments, the confidence processor 113 may be arranged to generate the global motion estimate confidence value in response to a distribution of depth estimate values (first depth estimates) for pixels in the region, and specifically in response to a variation measure for the distribution of depth estimate values for pixels in the region. For example, the variance of the generated motion based depth estimates may be determined, and the global motion estimate confidence value may be generated as a monotonically decreasing function of the variance.

In some embodiments, the confidence processor 113 may be arranged to determine the global motion estimate confidence value in response to the number of pixels in the region for which the depth estimate value deviates from an average or mean depth estimate value for the region by more than a threshold. The depth estimate values used may specifically be the motion based depth estimates, and thus in some embodiments, the confidence processor 113 may determine the global motion estimate confidence value by first determining the number of pixels (e.g. expressed as a proportion of the total number of pixels) for which the motion based depth estimate deviates from a reference depth value by more than a given threshold. The higher the number of pixels, the lower the global motion estimate confidence value. The approach may thus determine the global motion estimate confidence value in dependence on a number of "outlier" pixels, i.e. dependent on the number of pixels which deviate substantially from the reference depth. In some embodiments, the reference depth may be a predetermined depth value, such as for example a predetermined background depth value, i.e. a depth value designated to correspond to the background. In many embodiments, the background depth value may be the depth value indicative of the maximum distance from the viewing position. For example, typically depth values may be represented by values in a given range and the background depth value may be the depth value corresponding to the end point of the range corresponding to the furthest distance from the viewing position, i.e. the rearmost possible depth value. In some embodiments, the reference depth value may be a dynamically determined depth value, such as an average or median depth value for the motion based depth estimates of the region.

Thus, similarly to the consideration of the motion estimates, the global motion estimate confidence value may consider the depth values and set the global motion estimate confidence value dependent on the variation and distribution of these. Specifically, if there is a high degree of depth variation, or a large number of depth values deviate substantially from the average, mean, or maximum viewing distance depth, this may be indicative of a substantial proportion of non-background objects and thus may be indicative of the global motion estimate not being a sufficiently reliable measure of the global background motion in the region.

In some embodiments, the confidence processor 113 may be arranged to determine the global motion estimate confidence value in response to a number of pixels in the region for which a depth estimate value is further forward than a threshold depth value, i.e. the number of pixels for which the depth value is indicative of a lower distance to the viewing position than the threshold value. The depth estimate values may often be the motion based depth estimates and thus the confidence processor 113 may in such embodiments be arranged to identify the number of motion based depth estimates of the region (e.g. expressed as a proportion) which are further to the front than a given threshold depth. The approach may thus provide an efficient approach for determining how much of the region is likely to not be indicative of the background movement.

As a specific example, the confidence processor 113 may execute a process corresponding to the following pseudo-code

```
<bgconfTH>12</bgconfTH>
<nonconf>80</nonconf>
<confTH>40</confTH>


int tel=0;
for (int row = 0; row < disparityInMap.rows; ++row) {
 for (int col = 0; col < disparityInMap.cols; ++col) {
                 if (disparityInMap(row,col)>bgconfTH) {
                 tel=tel+1;
                 }
         }
       }
       int reltel=((tel*100)/(disparityInMap.rows*disparityInMap.cols));
       int conf=100;
```

```
if (reltel>confTH) {
conf=100-((reltel-confTH)*nonconf)/(100-confTH);
}
```

In this specific example, the confidence processor 113 essentially determines the number of pixels for which the motion based depth estimate exceeds a threshold value, i.e. it determines the number of pixels for which the motion based depth estimate is indicative of the pixel being further forward than a given depth.

In the above pseudo-code, the motion based depth estimates are provided in the form of the array disparityInMap which has a number of rows and columns. In the first loop, each pixel/ motion based depth estimate is processed sequentially in a double loop (the outer loop increasing the row number and the inner loop the column number). For each motion based depth estimate in disparityInMap(row,col), it is determined whether this is larger than the depth threshold, bgconfTH. If so, the number of pixels represented in the counter tel is increased. Thus, after the first double loop, the variable tel reflects the number of pixels/ motion based depth estimates further forward than the given threshold.

This value is then converted into a proportional representation (a percentage) which is stored in the value reltel. Specifically, a translation curve, making use of the parameters 'nonconf' and 'confTH', translates the parameter 'reltel' into the background confidence metric 'conf'. For a proportion of pixels, reltel, below a given threshold, confTH, the metric conf is set to 100%. Below this value, a conf value of less than 100% is generated.

As described, the global motion estimate may be determined for a region of the image which may in some cases be the entire image and in some cases may be a subset of the entire image. Thus, specifically, in some embodiments, the global motion estimate is not determined over the complete frames of the video sequence, but only over selected subregions of the frame.

For example, the region may consist of the current image excluding the center and the bottom of the current image. Since a foreground is expected to be at the center and bottom of the current image, the global motion vector is then computed from local motion vectors predominantly corresponding to the background. Consequently, subtracting that global motion vector from the local motion vector results in a relative motion vector that represents local motion relative to background motion. This may be considered as a more accurate and appropriate way of computing the relative motion vector.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1. An apparatus for determining depth estimates for pixels of an image of a sequence of images, the apparatus comprising:

   a motion based depth estimator (101) for generating a motion based depth estimate for pixels of the image, the motion based depth estimator (101) comprising:

   a global motion estimator (109) for determining a global motion estimate for a region of the image,
   a confidence processor (113) for determining a global motion estimate confidence value for the global motion estimate,
   a local motion estimator (107) for determining local motion estimates for pixels of the region, and
   a depth estimator (111) for determining motion based depth estimates for pixels of the region in response to the local motion estimates for the pixels of the region and the global motion estimate; and

   a depth processor (103) for generating an output depth estimate for a pixel of the pixels of the region in response to the global motion estimate confidence value and the motion based depth estimate for the pixel.

2. The apparatus of claim 1 wherein the depth processor (103) is arranged to generate the output depth estimate in response to a plurality of depth estimates for the pixel including the motion based depth estimate, and the depth processor (103) is further arranged to adapt a weight of the motion based depth estimate relative to at least one other depth estimate of the plurality of depth estimates in response to the global motion estimate confidence value.

3. The apparatus of claim 2 wherein the at least one other depth estimate includes at least one from the group of:

   - an image position depth estimate; and
   - an image object type depth estimate.

4. The apparatus of claim 1 wherein the depth processor (103) is arranged to generate the output depth estimate in response to a scaling of a difference between the motion based depth estimate and a default depth value; a scale factor for the scaling being dependent on the global motion estimate confidence value.

5. The apparatus of claim 4 wherein the default depth value corresponds to one of a background depth value and a display level depth value.

6. The apparatus of any previous claim wherein the confidence processor (113) is arranged to determine the global motion estimate confidence value in response to a number of pixels in the region for which a first depth estimate is further forward than a threshold depth value.

7. The apparatus of any previous claim wherein the confidence processor (113) is arranged to determine the global motion estimate confidence value in response to a distribution of first depth estimate for pixels in the region.

8. The apparatus of any previous claim wherein the confidence processor (113) is arranged to determine the global motion estimate confidence value in response to a variation measure for the distribution of first depth estimates for pixels in the region.

9. The apparatus of any previous claim wherein the confidence processor (113) is arranged to determine the global motion estimate confidence value in response to a number of pixels in the region for which a first depth estimate deviates from a reference depth value for the region by more than a threshold.

10. The apparatus of any of claims 6-9 wherein the first depth estimate for a pixel is determined from a motion based depth estimate for the pixel.

11. The apparatus of any previous claim wherein the confidence processor (113) is arranged to determine the global motion estimate confidence value in response to a distribution of local motion estimate values for pixels in the region.

12. The apparatus of any previous claim wherein the confidence processor (113) is arranged to determine the global motion estimate confidence value in response to a distribution of a difference measure between local motion estimate values for pixels in the region and the global motion estimate.

13. A method of determining depth estimates for pixels of an image of a sequence of images, the method comprising:

determining a global motion estimate for a region of the image;
determining a global motion estimate confidence value for the global motion estimate;
determining local motion estimates for pixels of the region;
determining motion based depth estimates for pixels of the region in response to the local motion estimates for the pixels of the region and the global motion estimate; and
generating a depth estimate for a pixel of the pixels of the region in response to the global motion estimate confidence value and the motion based depth estimate for the pixel.

14. A computer program product comprising computer program code means adapted to perform all the steps of claim 13 when said program is run on a computer.

101

105

Vid
Rx

109

113

LMOT
EST

107

GMOT
EST

CON
PRC

111

MOT
DPTH

DEP
EST

103

# FIG. 1

**FIG. 2**

**FIG. 3**

Europäisches
Patentamt

European
Patent Office

Office européen
des brevets

## EUROPEAN SEARCH REPORT

Application Number

EP 17 17 7699

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2015/158570 A1 (KONINKL PHILIPS NV [NL]) 22 October 2015 (2015-10-22)<br>* figure 2 *<br>* page 5, line 12 - line 28 *<br>* page 13, line 31 - page 15, line 9 *<br>----- | 1-14 | INV.<br>H04N13/00<br>G06T9/00<br>G06T7/579<br>H04N13/02 |
| Y | EP 2 915 333 A1 (GOOGLE INC [US]) 9 September 2015 (2015-09-09)<br>* paragraph [0035] - paragraph [0037] *<br>----- | 1-14 | |
| A | JOHN YU AN WANG: "Layered image representation: Identification of Coherent Components in Image Sequences", DISSERTATION MASSACHUSETTS INSTITUTE OF TECHNOLOGY, MIT, US, 28 February 1997 (1997-02-28), pages 1-111, XP002566706,<br>* abstract *<br>----- | 1,13,14 | |
| | | | TECHNICAL FIELDS SEARCHED (IPC)<br><br>H04N<br>G06T |

The present search report has been drawn up for all claims

| Place of search | Date of completion of the search | Examiner |
|---|---|---|
| The Hague | 18 December 2017 | Cooke, Edward |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 7699

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2017

| Patent document cited in search report | | Publication date | Patent family member(s) | | Publication date |
|---|---|---|---|---|---|
| WO 2015158570 | A1 | 22-10-2015 | NONE | | |
| EP 2915333 | A1 | 09-09-2015 | CN | 104756491 A | 01-07-2015 |
| | | | CN | 107277491 A | 20-10-2017 |
| | | | EP | 2915333 A1 | 09-09-2015 |
| | | | JP | 2016500975 A | 14-01-2016 |
| | | | KR | 20150079576 A | 08-07-2015 |
| | | | US | 2014118494 A1 | 01-05-2014 |
| | | | US | 2015304630 A1 | 22-10-2015 |
| | | | WO | 2014068472 A1 | 08-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015158570 A

- US 20090153742 A

**Non-patent literature cited in the description**

- True estimation with 3-D recursive search block matching. *IEEE Transactions on Circuits and Systems for Video Technology,* October 1993, vol. 3 (5